**Europäisches Patentamt**

**European Patent Office**

**Office européen des brevets**

(19)

(11) Veröffentlichungsnummer : **0 133 672**
**B1**

(12)   **EUROPÄISCHE PATENTSCHRIFT**

(45) Veröffentlichungstag der Patentschrift :
27.05.87

(21) Anmeldenummer : **84108892.5**

(22) Anmeldetag : **27.07.84**

(51) Int. Cl.⁴ : **C 09 J   3/00, C 09 J   3/14**

(54) **Klebestift und Verfahren zu seiner Herstellung.**

(30) Priorität : **04.08.83 DE 3328099**

(43) Veröffentlichungstag der Anmeldung :
**06.03.85 Patentblatt 85/10**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**DE-A- 2 204 482**
**DE-A- 2 311 746**
**US-A- 3 679 623**

(73) Patentinhaber : **Henkel Kommanditgesellschaft auf
Aktien
Postfach 1100 Henkelstrasse 67
D-4000 Düsseldorf-Holthausen (DE)**

(72) Erfinder : **Dierichs, Wolfgang, Dr.
Im Diepental 11
D-4000 Düsseldorf 13 (DE)**
Erfinder : **Gierenz, Gerhard, Dr.
Dieselstrasse 70
DE-5650 Solingen 19 (DE)**
Erfinder : **Kraus, Gabriella
Ulmenallee 140
D-4040 Neuss 21 (DE)**

# 0 133 672

## Beschreibung

Die Erfindung betrifft einen neuen weichabreibbaren Klebestift zum Auftragen eines Klebefilms mit dauerklebrigen druckempfindlichen Haftklebeeigenschaften.

Seit langem enthält die Literatur zahlreiche Vorschläge zur Herstellung von Klebstoffen in Stiftform, die zum Verkleben verschiedenster Substrate, insbesondere aber zum Verkleben von Papieren,geeignet sein sollen. Praktische Bedeutung hat vor allem ein bestimmter Typ solcher Klebestifte gefunden, der eine wäßrige Polyvinylpyrrolidonlösung als Klebstoffkomponente aufgenommen in einem Seifengel, insbesondere Natriumstearat als formgebende Gerüstsubstanz enthält. Stifte dieser Art sind insbesondere in der DE-PS 18 17 985 beschrieben.

Es hat nicht an Versuchen gefehlt, das die geforderte starre Stiftsubstanz bildende Seifengel durch andere Gerüstsubstanzen zu ersetzen. Die DE-PS 22 04 482 schlägt vor, als formgebende Gerüstsubstanz das Reaktionsprodukt von Sorbit und Benzaldehyd einzusetzen, wobei insbesondere dem Dibenzal-Sorbit Bedeutung zukommt und als klebende Komponente unter anderem Vinylmethylether-Maleinsäureanhydrid-Mischpolymerisate genannt sind. Obwohl es selbstverständlich ist, daß derartige Anhydridgruppen enthaltende Polymerisate in wäßrigen Medium verseifen können, findet sich jedoch kein Hinweis oder Anregung gerade mit speziellen Phosphatestern eine Umsetzung durchzuführen.

Ferner waren als Überzugs- und Klebmittel geeignete Mischungen aus Copolymerisaten von Alkylvinylestern mit Maleinsäureanhydrid sowie wasserlöslichen Phosphatestern nichtionogener Netzmittel aus der US-PS 3 679 623 bekannt.

Bezüglich der einzusetzenden Klebstoffharze ordnet sich die Offenbarung dieser Druckschrift im übrigen in die Lehre der zuvor genannten DE-PS 18 17 985 ein. Auch hier sollen als Klebstoffharze die klebrigen Lösungen zu Stiftkonsistenz eingedickt werden, die durch Auflösung von Kunstharzen in Wasser beziehungsweise in wäßrigen Mischungen organischer Lösungsmittel erhalten werden.

Die in den genannten Druckschriften eingesetzten Klebstoffkomponenten erhalten ihre Klebrigkeit durch das Vermischen beziehungsweise Auflösen des Klebstoffharzes im Lösungsmittel beziehungsweise Lösungsmittelgemisch. Verdunstet das Lösungsmittel oder entweicht es auf anderem Wege aus der Klebstoffmasse — beispielsweise durch Wegschlagen der Flüssigkomponente in das bestrichene Papier — verliert die klebstoffhaltige Masse ihre Klebrigkeit. Dementsprechend steht für die Verarbeitung abgeriebener Klebmassenaufstriche auf beispielsweise Papier nur ein begrenzter Zeitraum zur Verfügung, innerhalb dessen die Vereinigung mit dem zu verklebenden Material stattzufinden hat.

Aus der Klebstofftechnologie sind Klebharzkomponenten mit grundsätzlich anderen Eigenschaften bekannt, nämlich mit druckempfindlichen Haftklebeeigenschaften mit Dauerklebrigkeit. Klebstoffgemische auf Basis solcher dauerklebriger Harze enthalten zwar in der Regel für die Stufe der Applikation auch mehr oder weniger beschränkte Mengen einer beispielsweise wäßrigen Lösungsmittelphase, gleichwohl kommt diesem Lösungsmittelanteil hier keine gravierende Bedeutung zu. Die druckempfindlichen Haftklebeeigenschaften bleiben dem Klebstoff beziehungsweise Klebstoffgemisch auch dann erhalten, wenn die Flüssigphase aus der aufgetragenen Klebstoffschicht entwichen ist. Grundlage für solche Klebstoffsysteme sind dauerklebrige Harzkomponenten, die sich durch hohe Weichheit und hohen Tack auch im lösungsmittelfreien Zustand auszeichnen und gleichwohl befähigt sind, hinreichend feste Verklebungen auszubilden. Durch geeignete Einstellung der Klebmittellage kann dabei vorgesehen werden einerseits wieder lösbare Verklebungen auszubilden, andererseits aber auch so weitgehend feste Verklebungen zu schaffen, daß beispielsweise Papierverklebungen nur unter Papierriß zu zerstören sind.

Für die Herstellung von Klebestiften sind solche druckempfindlichen Klebstoffharze mit dauerklebrigen Hafteigenschaften bisher nicht vorgeschlagen worden. Das ist nicht verwunderlich. Eine entscheidende Voraussetzung für die Umwandlung und den Einsatz von Klebstoffmassen in Stiftform ist eine vergleichweise hohe Härte dieser Masse, damit beim Gebrauch sich der Stift als solcher nicht verändert und lediglich der erwünschte Abrieb am Stiftkopf erfolgt. Die Funktionsfähigkeit eines druckempfindlichen Haftklebers und insbesondere sein « tack » sind jedoch entscheidend an die weichklebrige Beschaffenheit von Klebharzkomponenten der hier betroffenen Art gebunden.

Die Erfindung geht gleichwohl von der Aufgabe aus, solche Klebstoffmaterialien in Stiftform zur Verfügung zu stellen, die beim Abrieb auf einer Empfängerfläche druckempfindliche Klebstoffschichten mit Dauerklebrigkeit erzeugen. Es wurde überraschenderweise gefunden, daß die Verwirklichung dieses eigentlich in sich widersprüchlichen Konzepts durch die Auswahl einer bestimmten Klebstoffkomponente und ihrer Kombination mit einer bestimmten Gerüstsubstanz möglich ist.

Gegenstand der Erfindung ist dementsprechend ein Klebestift aus einem Klebstoffharz, gelöst und/oder dispergiert in einem wäßrigen Lösungsmittelsystem, einer Gerüstsubstanz aus dem Umsetzungsprodukt von Sorbit und/oder Xylit mit Benzaldehyd und gewünschtenfalls weiteren üblichen Zusatzstoffen.

Der neue Klebestift ist nun dadurch gekennzeichnet, daß er als Klebstoffharz das Reaktionsprodukt aus der Umsetzung von Methylvinylether-Maleinsäureanhydrid-Mischpolymerisaten mit teilneutralisierten Phosphatestern nicht-ionogener Netzmittel des Alkylenoxidaddukt-Typs enthält. Das Überraschende des neuen Klebestifts liegt darin, daß seine auf einer Empfängerfläche abgeriebenen Klebstoffschichten druckempfindliche Haftklebeeigenschaften mit Dauerklebrigkeit aufweisen, d. h. Klebungen getrennt und

2

erneut zusammengefügt werden können.

Im einzelnen gilt zu den beiden wesentlichen stiftbildenden Komponenten Klebstoffharz und Gerüstsubstanz das Folgende :

Druckempfindliches Klebstoffharz mit Dauerklebrigkeit :

Reaktive, wasserlösliche, hochviskose Copolymere aus Methylvinylether (MVE) und Maleinsäureanhydrid (MA) mit alternierender Struktur der beiden Copolymereinheiten unterschiedlicher Molekulargewichtsbereiche sind beschrieben und als Handelsprodukte bekannt. Copolymere dieser Art mit spezifischen Viskositäten beispielsweise im Bereich von 0,1 bis 4,5 — bestimmt mit 1 g Copolymer/100 ml MEK, (25 °C) — reichen von vergleichsweise niedrigen bis zu hohen Molekulargewichten. Die Copolymerisate sind dank ihrer Maleinsäureanhydridgruppen reaktiv. So findet häufig schon beim Auflösen der Copolymerisate eine chemische Reaktion unter Aufspaltung der Maleinsäureanhydridstruktur und Bildung polymerer hochviskoser Teilester statt, die u. a. auch schon zur Verwendung als Klebstoffkomponente vorgeschlagen worden sind. Erfindungsgemäß ist vorgesehen, als Klebstoffharz das Reaktionsgemisch zu verwenden, das aus der Umsetzung solcher MVE/MA-Mischpolymerisate mit teilneutralisierten Phosphatestern nicht-ionogener Netzmittel des Alkylenoxidaddukt-Typs anfallen.

Werden nicht-ionogene Netzmittel des Alkylenoxidaddukt-Typs mit Phosphorsäure beziehungsweise ihren reaktionsfähigen Derivaten umgesetzt, so fällt ein Gemisch von Mono-und Di-Phosphatestern der nicht-ionogen Netzmittel als anionisches Reaktionsprodukt an. Durch Teilneutralisation dieses Reaktionsgemisches mit beispielsweise Natronlauge können partielle Salze gebildet werden, die weitgehend neutral reagieren, so daß beispielsweise der pH einer 10-prozentigen Lösung des teilneutralisierten Reaktionsprodukts bei 25 °C im Bereich von 5 bis 6 liegt. Das erfindungsgemäß eingesetzte Klebstoffharz entsteht aus der Umsetzung des eingangs erwähnten MVE-/MA-Mischpolymerisats mit diesen teilneutralisierten Phosphatestern. Druckempfindliche Klebstoffe mit Dauerklebrigkeit werden dabei erhalten, wenn man vergleichsweise größere Mengen des teilneutralisierten Phosphatestergemisches mit nur beschränkten Mengen des Copolymerisats umsetzt. Werden beispielsweise wenigstens etwa 2 Gewichtsteile des Phosphatestergemisches mit etwa 1 Gewichtsteil des MVA/MA-Copolymerisats umgesetzt, können bereits Klebeeffekte erhalten werden. Diese nehmen mit steigender Menge der Phosphatester — z. B. 2,5 oder 3 Gewichtsteile — zu. Bevorzugt enthalten die erfindungsgemäßen Stifte als Klebstoffkomponente die Reaktionsgemische aus der Umsetzung von etwa 4 bis 15 Gewichtsteilen des Phosphatestergemisches mit etwa 1 Gewichtsteil des MVE/MA-Copolymerisats, wobei entsprechende Ansatzverhältnisse von etwa 5 bis 12 Gewichtsteilen des Phosphatestergemisches auf einen Teil des Copolymerisats besonders geeignet sein können. Durch Auswahl und Abstimmung aufeinander vom Molekulargewicht des Copolymerisats einerseits und Menge der komplexen Phosphatester andererseits kann Einfluß auf die letztendlich erhaltenen Eigenschaften der druckempfindlichen Klebstoffschicht genommen werden. Es wird damit möglich einerseits haftklebrige Filmschichten auszubilden, die eine Lösung der Verklebung ohne Papierriß ermöglichen, während andererseits auch so festanziehende Klebstoffverbindungen geschaffen werden können, daß nur unter Papierriß die Zerstörung der Verklebung möglich wird.

Die bevorzugte hydrophobe Basis für den Aufbau der nicht-ionogenen Netzmittel des Alkylenoxidaddukt-Typs sind aliphatische, cycloaliphatische und/oder aromatische Alkohole mit vorzugsweise 5 bis 25, insbesondere 6 bis 22, C-Atomen im Molekül. Monofunktionelle Alkohole, die anschließend alkoxiliert werden, können bevorzugt sein. Die aliphatischen und cycloaliphatischen Alkohole können gesättigt oder olefinisch ungesättigt sein. Aliphatische Alkohole können geradkettig oder verzweigt sein. Cyclische bzw. aromatische Alkohole können substituiert sein, insbesondere mit Alkylresten substituiert sein. Eine besonders bevorzugte hydrophobe Grundkomponente für den Aufbau der nicht-ionogenen Netzmittel sind Alkylphenole, wobei der Alkylrest insbesondere 8 bis 12 C-Atome aufweisen kann. Insgesamt gilt das alkoholische Komponenten mit 12 bis 18 C-Atomen im Molekül als hydrophobe Basis besonders geeignet sein können.

Die bevorzugten Alkylenoxidaddukte sind die entsprechenden Ethylenoxidaddukte. Schon beschränkte Kettenlängen dieser Reste mit beispielsweise 2 bis 15, insbesondere 3 bis 10 wiederkehrenden Ethylenoxideinheiten sind geeignet, aber such längerkettige Alkylenoxidreste mit beispielsweise bis zu 50 Alkylenoxideinheiten fallen in den Rahmen der Erfindung.

Erfindungsgemäße Gerüstsubstanz :

Zum Einsatz kommt hier vor allem das Reaktionsprodukt von Sorbit und Benzaldehyd im Sinne der DE-PS 22 04 482 und insbesondere Dibenzal-Sorbit der im Fachhandel als gelbildende Substanz für die verschiedenartigsten Einsatzzwecke vertrieben wird. Durch die im folgenden geschilderten weiteren Einzelheiten im Sinne der erfindungsgemäßen Lehre wird es möglich, einerseits eine hinreichend feste Stiftstruktur mit andererseits dauerklebrigen Haftklebeeigenschaften zu vereinigen. Geeignet sind auch die entsprechenden Umsetzungsprodukte von Benzaldehyd und Xylit.

Weitere Einzelheiten zur Erfindung :

Es hat sich als zweckmäßig erwiesen, in den neuen Klebstiften die Klebharzkomponente — also das Reaktionsgemisch aus MVE-/MA-Copolymerisat und Phosphatteilestergemisch — in vergleichsweise großer Menge einzusetzen. Im allgemeinen macht diese Klebstoffharz-Komponente mehr als 50 Gewichtsprozent und vorzugsweise wenigstens 60 Gewichtsprozent des Gesamtgewichts des fertigen Stiftes aus. Hier liegt gegenüber den bisher bekannten Stiften eine nicht unwesentliche Abwandlung vor. Die Klebstifte auf Basis lösungsmittelaktivierter Klebharze enthalten im allgemeinen vergleichsweise

3

geringere Mengen an Klebstoffharz zusammen mit größeren Mengen an flüssigen Bestandteilen. So wird in der DE-PS 22 04 482 gefordert, 10 Gewichtsteile des Klebstoffharzes zusammen mit 5 bis 40 Gewichtsteilen Wasser und 10 bis 60 Gewichtsteilen organischen Lösungsmitteln einzusetzen. Demgegenüber wird in einer besonders bevorzugten Ausführungsform gemäß der Erfindung die Klebstoffharzkomponente in Mengen von etwa 65 bis 75 Gewichtsprozent — bezogen auf das Gewicht des fertigen Stiftes — eingesetzt.

Für die Formulierung des Stiftes und seine Herstellung ist auch erfindungsgemäß die Mitverwendung eines wäßrigen Lösungsmittelsystems bevorzugt, wobei die Einzelheiten hierzu im Rahmen der Stiftherstellung nachfolgend geschildert sind. Gegenüber dem genannten Stand der Technik gilt aber, daß die Menge des wäßrigen Lösungsmittelsystems vergleichsweise gering ist. Sie macht im fertigen Stift bevorzugt höchstens etwa 45 Gewichtsprozent aus und beträgt insbesondere nicht mehr als etwa 35 Gewichtsprozent. Etwa 20 bis 30 Gewichtsprozent des wäßrigen Lösungsmittelsystems — bezogen auf das Gewicht des fertigen Stifts — können besonders geeignet sein. Gegenüber dem Stand der Technik gilt dabei die bereits herausgestellte Tatsache, daß diese Flüssigkeitsanteile lediglich zur Herstellung und Konfektionierung des Stiftes wirklich bedeutungsvoll sind. Für die Ausbildung des Klebverhaltens ist die Gegenwart der Flüssigphase nicht entscheidend. Wird die Stiftmasse in dünner Schicht auf einem Trägerblatt ausgestrichen und in dieser Form für längere Zeiträume gelagert, so daß also die Flüssigphase vollständig oder im wesentlichen entwichen ist, besitzt gleichwohl der verbleibende Film die gewünschten dauerklebrigen druckempfindlichen Hafteigenschaften.

Der Gerüstbildner, insbesondere Dibenzal-Sorbit, liegt bevorzugt in Mengen von 1 bis 10 Gewichtsprozent und insbesondere in Mengen von etwa 1,5 bis 4 Gewichtsprozent — wiederum bezogen auf das Gewicht des fertigen Stiftes — vor. Durch Kombination der geschilderten Komponenten in den angegebenen Mischungsverhältnissen gelingt es, Stifte einer Druckfestigkeit von wenigstens 20 N, vorzugsweise von wenigstens 25 N oder auch von wenigstens 30 N, herzustellen und damit Festigkeiten des Klebstoffstiftes einzustellen, wie sie für die praktische Verwertbarkeit gefordert werden. Die Bestimmung der Druckfestigkeit erfolgt dabei an zylindrischen Prüflingen einer Länge von 30 mm und einem Durchmesser von 16 mm in einem Erichsen-Druckkraftmesser, Modell 904, bei 21 ± 1 °C. Die 30 mm langen Prüfstifte, deren Enden planparallel geschnitten sind, werden oben und unten mit einer genau aufsitzenden Kunststoffkappe fixiert. Der so vorbereitete Prüfling wird auf die Mitte einer Spindelplatte gestellt. Über dem Prüfling befindet sich in einem Abstand von ca. 10 mm eine zweite Platte, die mit einer Meßuhr verbunden ist. Auf mechanischem Wege wird dann die untere Platte mit dem Prüfling gegen die obere Platte gedrückt und der Wert des größten Zeigerausschlages bis zur Zerstörung des Prüflings bestimmt.

Die erfindungsgemäßen Stifte werden wie die bisher üblichen Klebestifte auf Seifengelbasis zweckmäßigerweise in verschließbaren Hüllen gelagert, die ein Herausschrauben und wieder Einziehen des Stiftes im Sinne eines Lippenstifts ermöglichen. Der Stiftmasse können gewünschtenfalls weitere Zusatzstoffe, wie Farbstoffe, Parfüm, Füllstoffe und/oder Pigmente, zugegeben sein.

In einer weiteren Ausführungsform betrifft die Erfindung das Verfahren zur Herstellung der neuen Klebestifte. Hierzu werden Klebharzkomponente und gerüstbildende Substanz in geeigneter Form homogen miteinander vermischt und diese Mischung dann zum Stift verformt. In der bevorzugten Ausführungsform des erfindungsgemäßen Verfahrens wird zunächst in Gegenwart beschränkter Mengen an Wasser die Klebstoffkomponente hergestellt. Hierzu wird zweckmäßigerweise die wäßrige Mischung der teilneutralisierten Phosphatester nicht-ionogener Netzmittel des Alkylenoxidaddukt-Typs auf 80 bis 100 °C erhitzt, woraufhin unter Bewegen des Reaktionsgemisches MVE-/MA-copolymerisatpulver zugefügt wird. Die Mischung wird bei erhöhter Temperatur, insbesondere im zuvor angegebenen Temperaturbereich für einen Zeitraum von etwa 10 bis 90 Minuten zur Reaktion gebracht. Im allgemeinen reicht bei Temperaturen von etwa 80 bis 90 °C eine Reaktionsdauer von etwa 15 bis 30 Minuten. Das zunächst trübe, hochviskose Reaktionsgemisch wird bei hinreichender Reaktion weniger viskos und aufgehellt.

Bevorzugt werden im nächsten Schritt beschränkte Mengen an wassermischbaren monofunktionellen oder polyfunktionellen Alkoholen bzw. ihren Ethern oder Teilethern zugegeben. Besonders geeignete alkoholische Komponenten sind Ethanol, Ethylenglykol oder Monoalkylether des Ethylenglykols, insbesondere Monomethylglykol. Durch Zugabe der alkoholischen Komponente wird das primär entstandene Reaktionsgemisch klar durchsichtig.

In die jetzt vorliegende flüssige Komponente wird die zuvor in beschränkten Mengen eines stark polaren Lösungsmittels, z. B. N-Methylpyrrolidon, gelöste Gerüstsubstanz eingegeben und mit dem Klebstoffharz innig vermischt. Die homogene Mischung wird in stiftförmige Behälter, insbesondere in verschließbare Hülsen, eingegossen und hier durch Abkühlen zum Erstarren gebracht.

Die erfindungsgemäßen Klebestifte sind nicht nur zum Auftrag von haftklebrigen Beschichtungen auf Papier und/oder mit Polymerisaten beschichteten Papieren geeignet, insbesondere können haftklebrige Beschichtungen auch auf Folien aus thermoplastischen Kunststoffen und/oder Metallen geschaffen werden. Gegenüber den bisher bekannten Klebestiften ist damit eine wesentliche Erweiterung gegeben.

Beispiel 1

In einem, mit einem intensiv wirkenden Rückflußkühler versehenen 250-ml-Rührkolben wurden 94,5 g eines komplexen Phosphatestergemisches (überwiegend Mono- und Diester, auf den Neutralbereich teilneutralisiert und aufbauend auf ein Nonylphenol 10 EO-Addukt) und 15,2 g Wasser vermischt und im Glycerinbad auf ca. 90 °C erhitzt. Es entstand eine weiße hochviskose Masse. Hierauf wurden 10,5 g eines MVE MA-Copolymerisats mittleren Molekulargewichts — spezifische Viskosität der Lösung von 1 g Copolymer 100 ml MEK bei 25 °C 1,0 bis 1,4 — als weißes Pulver unter starkem Rühren eingestreut und bei der genannten Temperatur intensiv verrührt. Die Mischung wurde zunächst nach 10-15 Minuten sehr hochviskos, so daß die Rührgeschwindigkeit gedrosselt werden mußte. Nach einer Rührzeit von etwa 30 Minuten bei 90 °C wurden 15,2 Ethanol hinzugefügt. Die Viskosität der Lösung sank im Verlauf des weiteren, wieder beschleunigten Rührens, stark ab, und die Lösung wurde klarer. Anschließend wurde eine separat durch Erwärmen auf etwa 100 °C hergestellte Lösung von 4,3 g Dibenzalsorbit in 10,3 g N-Methylpyrrolidon der Mischung unter Rühren zugefügt. Kurzfristig wurde die Temperatur der Mischung im Glycerinbad auf 95-100 °C erhöht, anschließend wurde die Masse in Stifthülsen gegossen.

Nach eintägigem Stehenlassen bei 20 °C wurde die Druckfestigkeit der entstandenen Stifte mit einem Erichsen-Druckfestigkeitsmessgerät gemessen. Es wurde ein Mittelwert von 35 N 16 mm Ø festgestellt.

Der Stiftabrieb liefert Schichten mit dauerklebrigen Eigenschaften.

Beispiel 2

Nach der Verarbeitungsvorschrift des Beispiels 1 wird mit den gleichen Ausgangsmaterialien, jedoch in anderen Mengenverhältnissen, eine zweite Stiftmasse mit dauerklebrigen Eigenschaften wie folgt hergestellt :

| | |
|---|---|
| 63,0 g komplexes Phosphatestergemisch | 42 Gew.-% |
| 12,0 g VME/MA-Copolymerisat | 8 Gew.-% |
| 30,1 g Wasser | 20,1 Gew.-% |
| 30,2 g Ethanol | 20,1 Gew.-% |
| 10,3 g N-Methylpyrrolidon | 6,9 Gew.-% |
| 4,3 g Dibenzalsorbit | 2,9 Gew.-% |
| | 100,0 Gew.-% |

Auch hier werden beim Abrieb des Stiftes auf ein Empfängerblatt dauerklebrige Schichten mit guten Klebeeigenschaften erhalten.

**Patentansprüche**

1. Klebestift zum Auftragen eines Klebefilms mit dauerklebringen druckempfindlichen Haftklebeeigenschaften aus einem Klebstoffharz, gelöst und/oder dispergiert in einem wäßrigen Lösungsmittelsystem mit einer Gerüstsubstanz, bestehend aus einem Reaktionsprodukt aus Sorbit und/oder Xylit und Benzaldehyd sowie gewünschtenfalls weiteren üblichen Zusatztoffen, dadurch gekennzeichnet, daß das Klebstoffharz das Reaktionsgemisch aus der Umsetzung von Methylvinylether-Maleinsäureanhydrid-Mischpolymerisaten mit teilneutralisierten Phosphatestern nicht-ionogener Netzmittel des Alkylenoxidaddukt-Typs ist.

2. Klebestift nach Anspruch 1, dadurch gekennzeichnet, daß die Klebstoffharz-Komponente mehr als 50 Gewichtsprozent, vorzugsweise wenigstens 60 Gewichtsprozent, und insbesondere etwa 65 bis 75 Gewichtsprozent — jeweils bezogen auf das Gewicht des fertigen Stiftes — ausmacht.

3. Klebestift nach Ansprüchen 1 und 2, dadurch gekennzeichnet, daß das wäßrige Lösungsmittelsystem (Flüssigphase) höchstens 45 Gew.-%, bevorzugt nicht mehr als 35 Gew.-% und insbesondere etwa 20 bis 30 Gew.-% — bezogen auf das Stiftgewicht — ausmacht.

4. Klebestift nach Ansprüchen 1 bis 3, dadurch gekennzeichnet, daß als Gerüstsubstanz Dibenzal-Sorbit und/oder die entsprechende Xylit-Verbindung vorliegt, der bevorzugt in Mengen von 1 bis 10 Gew. %, insbesondere 1,5 bis 4 Gew.-% — bezogen auf das Stiftgewicht — zugegen ist.

5. Klebestift nach Ansprüchen 1 bis 4, dadurch gekennzeichnet, daß der Stift eine Druckfestigkeit von wenigstens 20 N, vorzugsweise von wenigstens 30 N — bestimmt im Erichsen-Druckkraftmesser bei 21 ± 1 °C an zylindrischen Prüflingen einer Länge von 30 mm und einem Durchmesser von 16 mm — aufweist.

6. Klebestift nach Ansprüchen 1 bis 5, dadurch gekennzeichnet, daß als Lösungsmittelsystem ein homogenes Gemisch von Wasser, niederen mono- und/oder polyfunktionellen Alkoholen beziehungsweise ihren Ethern und/oder Teilethern und einem wassermischbaren stark polaren Lösungsmittel vorliegt.

7. Klebestift nach Anspruch 6, dadurch gekennzeichnet, daß als Flüssigphase ein Gemisch aus Wasser, Ethanol, Ethylenglykol und/oder seinen Ethern und N-Methylpyrrolidon vorliegt.

8. Klebestift nach Ansprüchen 1 bis 7, dadurch gekennzeichnet, daß als Klebstoffharz ein Reaktionsgemisch vorliegt, das durch Umsetzung eines teilneutralisierten Phosphat-mono- und -diester-Gemisches mit dem Methylvinylether-/Maleinsäureanhydrid-copolymerisat in einem Mischungsverhältnis (Gewichtsteile) von Phosphatestergemisch/Copolymerisat im Bereich von wenigstens etwa 2 : 1, vorzugsweise von etwa 4 bis 15 : 1, insbesondere im Bereich von etwa 5 bis 12 : 1, hergestellt worden ist.

9. Verfahren zur Herstellung von Klebestiften nach Ansprüchen 1 bis 8, dadurch gekennzeichnet, daß man

a) die wäßrige Mischung der teilneutralisierten Phosphatester nicht-ionogener Netzmittel des Alkylenoxidaddukt-Typs (pH einer 10 %igen Lösung dieser Phosphatester 5 bis 6) auf 80 bis 100 °C erhitzt,

b) Methylvinylether-/Maleinsäureanhydrid-copolymerisat feinpulvrig unter Bewegen des Reaktionsgemisches zufügt,

c) die Mischung für den Zeitraum von etwa 10 bis 90 Minuten reagieren läßt,

d) die flüssige Alkohol- bzw. Ether-Komponente einrührt und

e) abschließend mit der in dem stark polaren Lösungsmittel gelösten Gerüstsubstanz versetzt, woraufhin

f) man die homogene Mischung in Stiftform, vorzugsweise in verschließbaren Hülsen, erstarren läßt.

10. Verwendung der Klebestifte nach Ansprüchen 1 bis 8 zum Auftragen von druckempfindlichen Beschichtungen mit Dauerklebrigkeit auf Papier, Kunststoffölien und/oder Metallen.

## Claims

1. An adhesive stick for applying an adhesive film having permanently tacky, pressure-sensitive contact adhesion properties of an adhesive resin dissolved and/or dispersed in an aqueous solvent system containing a gelforming agent consisting of a reaction product of sorbitol and/or xylitol and benzaldehyde and, if desired, other standard additives, characterized in that the adhesive resin is the reaction mixture from the reaction of methyl vinyl ether/maleic acid anhydride copolymers with partially neutralized phosphate esters of nonionic wetting agents of the alkylene oxide adduct type.

2. An adhesive stick as claimed in Claim 1, characterized in that the adhesive resin component makes up more than 50 % by weight and preferably at least 60 % by weight and more preferably about 65 to 75 % by weight, based on the weight of the finished stick.

3. An adhesive stick as claimed in Claims 1 and 2, characterized in that the aqueous solvent system (liquid phase) makes up at most 45 % by weight, preferably no more than 35 % by weight and more preferably from about 20 to 30 % by weight, based on the weight of the stick.

4. An adhesive stick as claimed in Claims 1 to 3, characterized in that it contains as gel-forming agent dibenzal-sorbitol and/or the corresponding xylitol compound which is preferably present in quantities of from 1 to 10 % by weight and more preferably in quantities of from 1.5 to 4 % by weight, based on the weight of the stick.

5. An adhesive stick as claimed in Claims 1 to 4, characterized in that the stick has a compressive strength of at least 20 N and preferably of at least 30 N, as measured with an Erichsen compression gauge at 21 ± 1 °C on cylindrical test specimens 30 mm long and 16 mm in diameter.

6. An adhesive stick as claimed in Claims 1 to 5, characterized in that the solvent system present is a homogeneous mixture of water, lower mono- and/or polyfunctional alcohols or ethers and/or partial ethers thereof and a water-miscible strongly polar solvent.

7. An adhesive stick as claimed in Claim 6, characterized in that a mixture of water, ethanol, ethylene glycol and/or ethers thereof and N-methyl pyrrolidone is present as liquid phase.

8. An adhesive stick as claimed in Claims 1 to 7, characterized in that the adhesive resin present is a reaction mixture which has been obtained by reaction of a partially neutralized phosphate mono- and diester mixture with methyl vinyl ether/maleic acid anhydride copolymer in a mixing ratio (parts by weight) of phosphate ester mixture to copolymer of at least about 2 : 1, preferably of about 4 to 15 : 1 and more preferably of about 5 to 12 : 1.

9. A process for producing the adhesive sticks claimed in Claims 1 to 8, characterized in that

a) an aqueous mixture of the partially neutralized phosphate esters of non-ionic wetting agents of the alkylene oxide adduct type (pH of a 10 % solution of these phosphate esters 5 to 6) is heated to 80-100 °C,

b) methyl vinyl ether/maleic acid anhydride copolymer is added in the form of a fine powder with agitation of the reaction mixture,

c) the mixture is left to react for about 10 to 90 minutes,

d) the liquid alcohol or ether component is stirred in and

f) the homogeneous mixture is allowed to solidify in stick form, preferably in sealable tubes.

10. The use of the adhesive sticks claimed in Claims 1 to 8 for applying pressure-sensitive coatings with permanent tackiness to paper, plastics films and/or metals.

## Revendications

1. Bâton de colle pour l'application d'une pellicule de colle ayant des propriétés d'adhérence durables sensibles à la pression, ce bâton étant constitué d'une résine adhésive, en solution et/ou en dispersion dans un système de solvants aqueux avec une substance de soutien, comprenant un produit réactionnel de sorbitol et/ou de xylite et de benzaldéhyde, ainsi qu'éventuellement d'autres additifs habituels, caractérisé en ce que la résine adhésive est le mélange réactionnel obtenu par la réaction de copolymères d'éther méthylvinylique et d'anhydride d'acide maléique avec des esters phosphates partiellement neutralisés d'agents mouillants non ionogènes du type des produits d'addition d'oxyde d'alkylène.

2. Bâton de colle selon la revendication 1, caractérisé en ce que le composant de résine adhésive représente plus de 50 % en poids, de préférence, au moins 60 % en poids et, en particulier, environ 65 à 75 % en poids (rapporté chaque fois au poids du bâton fini).

3. Bâton de colle selon les revendications 1 et 2, caractérisé en ce que le système de solvants aqueux (phase liquide) représente au maximum 45 % en poids, de préférence, au maximum 35 % en poids et, en particulier, environ 20 à 30 % en poids (rapporté au poids du bâton).

4. Bâton de colle selon les revendications 1 à 3, caractérisé en ce que, comme substance de soutien, on a le dibenzal-sorbitol et/ou le composé correspondant de xylite que l'on ajoute, de préférence, en quantités de 1 à 10 % en poids, en particulier, de 1,5 à 4 % en poids, rapporté au poids du bâton.

5. Bâton de colle selon les revendications 1 à 4, caractérisé en ce que le bâton a une résistance à la pression d'au moins 20 N, de préférence, d'au moins 30 N (déterminé dans le dispositif de mesure de force de pression d'Erichsen à 21 + 1 °C sur des éprouvettes cylindriques d'une longueur de 30 mm et d'un diamètre de 16 mm).

6. Bâton de colle selon les revendications 1 à 5, caractérisé en ce que, comme système solvant, on a un mélange homogène d'eau, d'alcools mono- et/ou polyfonctionnels inférieurs ou leurs éthers et/ou leurs éthers partiels et un solvant fortement polaire miscible à l'eau.

7. Bâton de colle selon la revendication 6, caractérisé en ce que, comme phase liquide, on a un mélange d'eau, d'éthanol, d'éthylène-glycol et/ou de ses éthers et de N-méthylpyrrolidone.

8. Bâton de colle selon les revendications 1 à 7, caractérisé en ce que, comme résine adhésive, on a un mélange réactionnel que l'on prépare par la réaction d'un mélange de mono- et de diesters phosphates partiellement neutralisés avec le copolymère d'éther méthylvinylique/anhydride d'acide maléique dans un rapport de mélange (parties en poids) du mélange d'esters phosphates/copolymère se situant dans l'intervalle d'au moins environ 2 : 1, de préférence, d'environ 4 à 15 : 1, en particulier, dans le domaine d'environ 5 à 12 : 1.

9. Procédé de fabrication de bâtons de colle selon les revendications 1 à 8, caractérisé en ce que :

a) on chauffe, à 80-100 °C, le mélange aqueux d'esters phosphates partiellement neutralisés d'agents mouillants non ionogènes du type des produits d'addition d'oxyde d'alkylène (pH d'une solution à 10 % de ces esters phosphates : 5 à 6),

b) on ajoute le copolymère d'éther méthylvinylique/anhydride d'acide maléique sous forme d'une fine poudre tout en déplaçant le mélange réactionnel,

c) on laisse réagir le mélange pendant un laps de temps d'environ 10 à 90 minutes,

d) on délaie le composant alcool ou éther liquide, et

e) on ajoute finalement la substance de soutien dissoute dans le solvant fortement polaire, après quoi

f) on laisse se solidifier le mélange homogène sous forme d'un bâton, de préférence, dans des douilles pouvant être fermées.

10. Utilisation des bâtons de colle selon les revendications 1 à 8 pour l'application d'enduits sensibles à la pression d'une adhésivité durable sur le papier, les feuilles de matières synthétiques et/ou les métaux.